# EUROPÄISCHE PATENTANMELDUNG

(11) **EP 4 585 627 A1**
(43) Veröffentlichungstag der Anmeldung: **16.07.2025**
(21) Anmeldenummer: 24151617.8
(22) Anmeldetag: 12.01.2024
(51) Int. Cl.: C08G 16/02, C08G 16/06, C08G 18/10, C08G 18/28, C08G 18/48, C08G 18/75, C08G 18/76, C08G 18/80, C08K 3/04, C08K 3/34, C08L 61/34, C08L 71/02

(54) **EINKOMPONENTIGE HÄRTBARE POLYMERZUSAMMENSETZUNG ENT-HALTEND ALDEHYDE UND CYANOACETATE**

(71) Anmelder: Sika Technology AG, 6340 Baar (CH)
(72) Erfinder: KRAMER, Andreas, 8008 Zürich (CH); BURCKHARDT, Urs, 8049 Zürich (CH); HÄBERLE, Hans, 78262 Gailingen (DE)
(74) Vertreter: Sika Patent Attorneys

(57) **Zusammenfassung**

Gegenstand der Erfindung ist eine einkomponentige härtbare Zusammensetzung enthaltend mindestens eine Verbindung **A** mit Aldehydgruppen, mindestens eine Verbindung **B** mit Cyanoacetatgruppen und mindestens ein Zeolith, wobei mindestens eine der beiden Verbindungen **A** und **B** ein Polymer mit einem mittleren Molekulargewicht Mₙ von 500 bis 20'000 g/mol ist.

Die Zusammensetzung ist lagerstabil, ohne besondere Schutzmassnahmen anwendbar und härtet bei Kontakt mit Luftfeuchtigkeit unter Umgebungsbedingungen zu einem elastischen Polymer von hoher Festigkeit, hoher Dehnbarkeit und guter Beständigkeit gegen Hitze und Wasser.

## Beschreibung

### Technisches Gebiet

Die Erfindung betrifft lagerstabile einkomponentige, bei Umgebungsbedingungen unter dem Einfluss von Feuchtigkeit härtbare Polymerzusammensetzungen enthaltend Aldehyde und Cyanoacetate, sowie ihre Verwendung als elastische Klebstoffe, Dichtstoffe oder Beschichtungen.

### Stand der Technik

Härtbare Polymerzusammensetzungen, welche als Ganzes lagerstabil sind, das heisst in einer einzigen Verpackung über einen längeren Zeitraum aufbewahrt werden können, ohne ihre Anwendbarkeit zu verlieren, werden auch als einkomponentige Zusammensetzungen oder Einkomponentensysteme bezeichnet. Bei Umgebungsbedingungen anwendbare Systeme sind typischerweise feuchtigkeitshärtend, d.h. sie härten bei der Applikation unter Umgebungsbedingungen durch den Kontakt mit Luftfeuchtigkeit zu einem vernetzten Polymer aus. Gegenüber zweikomponentigen Zusammensetzungen, bei welchen die an der Aushärtungsreaktion beteiligten reaktiven Verbindungen in voneinander getrennt verpackten Komponenten aufbewahrt werden, welche erst kurz vor oder während der Applikation miteinander vermischt werden und dadurch aushärten, sind Einkomponentensysteme wesentlich einfacher in der Anwendung und verursachen deutlich weniger Abfall. Das Dosieren und Mischen der beiden Komponenten entfällt, und es kann genau so viel Menge wie benötigt appliziert werden, wobei nicht verwendete Anteile der Zusammensetzung in der Verpackung verbleiben und zu einem späteren Zeitpunkt verwendet werden können.

Bekannte feuchtigkeitshärtende Einkomponentensysteme sind insbesondere Isocyanatgruppen-haltige Polyurethanzusammensetzungen. Deren Formulierung, Herstellung und Verwendung stellt in der Praxis aber eine Reihe von Herausforderungen. Sie enthalten zumeist erhebliche Mengen an gesundheitsschädlichen monomeren Diisocyanaten, welche den Anwender gefährden und Schutzmassnahmen bei der Handhabung notwendig machen können. Bei der Aushärtungsreaktion entstehet Kohlendioxid, das zu Blasenbildung führen kann. Dies kann zwar mit der Verwendung von latenten Härtern wie insbesondere Aldiminen verhindert werden. Dabei werden bei der Aushärtung aber Aldehyde freigesetzt, welche nicht in die Polymermatrix eingebunden werden und zu Problemen mit Emission und/oder Geruchsbildung führen können, oder in der ausgehärteten Zusammensetzung verbleiben, wo sie eine weichmachende Wirkung ausüben und/oder aus der Zusammensetzung migrieren können.

Weiterhin bekannt sind einkomponentige Zusammensetzungen auf der Basis von silanfunktionellen Polymeren oder Silikonen. Diese härten mit Luftfeuchtigkeit durch Hydrolyse und Kondensation von Silangruppen aus, wobei Alkohole, vor allem Methanol oder Ethanol, Essigsäure oder Oxime freigesetzt werden, welche giftig sind und Emissionen verursachen. Zudem enthalten sie als Vernetzer und/oder Trocknungsmittel typischerweise hohe Mengen an niedrigmolekularen Silanen, welche ebenfalls gesundheitsschädlich sind.

US 2020/0257202 beschreibt die Umsetzung von polymeren Dicyanoacetaten mit aromatischen Dialdehyden in Lösemitteln, sowie die Applikation der erhaltenen Lösung auf Glas, wobei ein klebriger Film entsteht. Dabei liegen die Cyanoacetate und die Aldehyde nicht zusammen in einem gemeinsamen Gebinde als einkomponentige Zusammensetzung vor.

US 10,563,040 beschreibt eine härtbare Zusammensetzung enthaltend ein Polyacetoacetat, ein Polyaldehyd und einen basischen Katalysator, wobei das Polyacetoacetat und der Polyaldehyd in voneinander getrennten Komponenten gelagert werden.

### Darstellung der Erfindung

Aufgabe der vorliegenden Erfindung ist es, eine einkomponentige Zusammensetzung zur Verfügung zu stellen, welche lagerstabil und mit Luftfeuchtigkeit aushärtbar ist und die Nachteile des Standes der Technik überwindet, insbesondere in Bezug auf toxische Inhaltsstoffe, Blasenbildung und Emissionen durch bei der Aushärtung nicht in die Polymermatrix eingebundene Substanzen.

Die erfindungsgemässe Zusammensetzung umfasst mindestens eine Verbindung **A** mit Aldehydgruppen, mindestens eine Verbindung **B** mit Cyanoacetatgruppen und ein Zeolith. Die erfindungsgemässe einkomponentige Zusammensetzung ist lagerstabil und härtet bei Kontakt mit Luftfeuchtigkeit unter Umgebungsbedingungen zu einem elastischen Polymer aus. Dies ist in dreierlei Hinsicht überraschend. Einerseits würde man erwarten, dass die Polyaldehyde und die Cyanoacetate unmittelbar miteinander reagieren und somit noch in der Verpackung aushärten. Weiterhin überraschend ist, dass die Aushärtung über den Kontakt mit Luftfeuchtigkeit erfolgt, obwohl keine der beteiligten Reaktivgruppen eine hydrolytische Aktivität aufweist. Und besonders überraschend ist schliesslich, dass zur Aushärtung die Anwesenheit eines Zeoliths notwendig ist, denn ohne Zeolith wird keine Aushärtung beobachtet. In aus dem Stand der Technik bekannten Einkomponentensystemen wird Zeolith bzw. Molekularsieb als Trocknungsmittel eingesetzt, wobei es die Aushärtung mit Luftfeuchtigkeit typischerweise stark verzögert. Die Verbindung **A** und die Verbindung **B** sind beide toxikologisch wenig bedenkliche Stoffe, welche keine Gefahrenkennzeichnung erfordern und ohne spezielle Vorkehrungen gehandhabt werden können. Die Zusammensetzung ist bei Umgebungsbedingungen gut verarbeitbar, ohne dass organische Lösemittel zum Lösen oder Verdünnen oder Wasser zum Emulgieren oder Dispergieren von Bestandteilen benötigt werden. Die Aushärtung ist nicht empfindlich auf Blasenbildung und verursacht keine Emissionen. Durch die Aushärtung entsteht ein nicht-klebriges, elastisches Polymer von hoher Festigkeit, hoher Dehnbarkeit, hohem Weiterreisswiderstand und guter Beständigkeit gegen Hitze und Wasser. Durch die Kombination dieser vorteilhaften Eigenschaften verfügt die erfindungsgemässe Zusammensetzung über eine besonders einfache Handhabung ohne besondere Schutzmassnahmen und eine hohe Robustheit bei mechanischer, thermischer oder chemischer Belastung nach der Aushärtung.

Die erfindungsgemässe Zusammensetzung ist besonders geeignet für die Verwendung als elastischer Klebstoff, Dichtstoff oder Beschichtung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine einkomponentige härtbare Zusammensetzung enthaltend
- mindestens eine Verbindung **A** mit Aldehydgruppen,
- mindestens eine Verbindung **B** mit Cyanoacetatgruppen,
- mindestens ein Zeolith,
wobei mindestens eine der beiden Verbindungen **A** und **B** ein Polymer mit einem mittleren Molekulargewicht Mₙ von 500 bis 20'000 g/mol ist, gemessen mittels Gelpermeationschromatographie (GPC) gegen Polystyrol als Standard.

Als "einkomponentig" wird eine Zusammensetzung bezeichnet, welche verpackt in einem einzigen Gebinde lagerstabil aufbewahrt werden kann.

Als "lagerstabil" wird eine Zusammensetzung bezeichnet, die bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Cyanoacetatgruppen" werden Reaktivgruppen der Formel 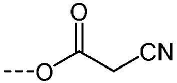 bezeichnet.

Eine gestrichelte Linie in den Formeln in diesem Dokument stellt jeweils die Bindung zwischen einem Substituenten und dem zugehörigen Molekülrest dar.

Als "Zeolith" werden natürliche oder synthetische Zeolithe bezeichnet.

Der Begriff "Polymer" umfasst auch sogenannte Oligomere mit zwei, drei oder vier Repetiereinheiten.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Mit "Poly" beginnende Substanznamen wie Polyaldehyd oder Polyol bezeichnen Substanzen, die formal zwei oder mehr der in ihrem Namen vorkommenden funktionellen Gruppen pro Molekül enthalten.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Die Zusammensetzung enthält mindestens ein Zeolith. Bevorzugt wird der Zeolith in Form eines feinen Pulvers eingesetzt. Der Zeolith ermöglicht überraschenderweise die Aushärtung der Zusammensetzung durch Kontakt mit Luftfeuchtigkeit. Es scheint, dass die Kombination von Zeolith und Feuchtigkeit eine katalytische Wirkung auf die Reaktion der Aldehydgruppen mit den Cyanoacetatgruppen ausübt. Dies ist sehr überraschend und konnte aus dem Stand der Technik nicht abgeleitet werden.

Bevorzugt hat der Zeolith eine Porengrösse von 3 bis 10 Å, besonders bevorzugt 3 bis 5 Å, insbesondere 3 bis 4 Å, am meisten bevorzugt 3 Å. Ein solcher Zeolith wird auch als Molekularsieb bezeichnet. Damit wird eine besonders schnelle Aushärtung erreicht.

Bevorzugt enthält die Zusammensetzung bezogen auf die gesamte Zusammensetzung 1 bis 20 Gewichts-%, insbesondere 2 bis 10 Gewichts-%, Zeolith. Damit wird eine Zusammensetzung mit guter Lagerstabilität und schneller Aushärtung erhalten.

Die Zusammensetzung enthält weiterhin mindestens eine Verbindung **A** mit Aldehydgruppen.

Bevorzugt weist die Verbindung **A** eine, zwei, drei oder vier, insbesondere zwei oder drei, Aldehydgruppen und ein Molekulargewicht, oder im Fall einer oligomeren oder polymeren Verbindung **A** mittleres Molekulargewicht Mₙ, von 100 bis 20'000 g/mol auf.

Bevorzugt sind die Aldehydgruppen der Verbindung **A** direkt an einen aromatischen Ring gebunden. Eine solche Verbindung **A** ermöglicht eine besonders schnelle Aushärtung.

Besonders geeignet sind Polyaldehyde wie insbesondere Phthalaldehyd, Isophthalaldehyd, Terephthalaldehyd, 9,10-Anthracendicarbaldehyd, Naphthalindicarbaldehyd, 1,2-Cyclohexandicarbaldehyd, 1,3-Cyclohexandicarbaldehyd, 1,4-Cyclohexandicarbaldehyd, Glutaraldehyd, 1,6-Hexandialdehyd, 1,7-Heptandialdehyd, 1,8-Octandialdehyd, 1,9-Nonandialdehyd, 2-Methyl-1,8-octandialdehyd, 1,10-Decandialdehyd, 1,11-Undecandialdehyd, 1,12-Dodecandialdehyd, Maleindialdehyd, Fumardialdehyd, Tricyclo[5.2.1.0^{2,6}]decan-3(4),8(9)-dicarbaldehyd, 3,6,9-Trioxaundecan-1,11-dial, sowie Aldehydgruppen-haltige Polymere.

Bevorzugt ist die Verbindung **A** ein Polymer mit einem mittleren Molekulargewicht Mₙ von 500 bis 20'000 g/mol, besonders bevorzugt 1'000 bis 15'000 g/mol, insbesondere 2'000 bis 10'000 g/mol, und einer mittleren Aldehyd-Funktionalität von 1.6 bis 4.0, bevorzugt 1.8 bis 3.5, besonders bevorzugt 2.0 bis 3.0, insbesondere 2.2 bis 3.0.

Bevorzugt sind Aldehydgruppen-haltige Polymere mit einem Polymerrückgrat enthaltend Poly(oxyalkylen)-Einheiten und/oder Polyester-Einheiten.

Bevorzugte Oxyalkylen-Repetiereinheiten sind ausgewählt aus der Liste bestehend aus Oxy-1,2-propylen, Oxy-1,3-propylen, Oxy-1,4-butylen, Oxy-1,2-butylen und Oxyphenylethylen. Zusätzlich kann die Verbindung **A** einen gewissen Gehalt an Oxyethylen Einheiten aufweisen, insbesondere höchstens 25 Gewichts-% Oxyethylen bezogen auf das Gesamtgewicht der Poly(oxyalkylen)-Einheiten.

Ein besonders bevorzugtes Aldehydgruppen-haltiges Polymer enthält ein Poly-(oxy-1,2-propylen)-Rückgrat, wobei dieses einen Gehalt von 0 bis 25 Gewichts-% Poly(oxyethylen)-Einheiten bezogen auf das Poly(oxy-1,2-propylen)-Rückgrat enthalten kann, insbesondere an den Kettenenden. Aldehyd-funktionelle Polymere mit einem solchen Rückgrat sind niedrigviskos und somit besonders gut handhabbar und besonders hydrophob. Sie ermöglichen Zusammensetzungen mit besonders guter Verarbeitbarkeit, hoher Dehnbarkeit und guter Wasserbeständigkeit.

Bevorzugte Aldehydgruppen-haltige Polymere mit einem Polyester-Rückgrat sind abgeleitet von Dicarbonsäuren und Di- oder Triolen, oder von Triglyceriden, oder es sind Polyester auf Basis von Dimer- oder Trimerfettsäuren. Besonders bevorzugt sind Polyester von Dimerfettsäuren oder Polyester abgeleitet von Rizinusöl, Derivaten von Rizinusöl oder Pflanzenölen. Aldehyd-funktionelle Polymere mit einem solchen Rückgrat sind besonders hydrophob und ermöglichen Zusammensetzungen mit besonders guter Beständigkeit gegen Hitze und Wasser. Ausserdem beruhen sie auf nachwachsenden Rohstoffen und sind dadurch potentiell besonders nachhaltig.

Ein besonders bevorzugtes Aldehydgruppen-haltiges Polymer enthält zusätzlich Urethangruppen. Dies ermöglicht Zusammensetzungen mit besonders hoher Dehnbarkeit und besonders hohem Weiterreisswiderstand.

Bevorzugt ist die Verbindung **A** bzw. das Aldehydgruppen-haltige Polymer bei Raumtemperatur flüssig, insbesondere mit einer Viskosität bei 20 °C von 0.01 bis 700 Pa s, bevorzugt 0.1 bis 500 Pa s, besonders bevorzugt 0.5 bis 200 Pa s, insbesondere 1 bis 100 Pa s, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹. Solche Verbindungen sind bei Umgebungstemperaturen auch ohne Zusatz von Lösemitteln oder Verdünnern gut handhabbar.

Besonders bevorzugt als Verbindung **A** ist ein bei Raumtemperatur flüssiges Urethangruppen-haltiges Polymer mit einem mittleren Molekulargewicht Mₙ von 2'000 bis 10'000 g/mol und einer mittleren Aldehyd-Funktionalität von 1.8 bis 3.5, bevorzugt 2.0 bis 3.0, insbesondere 2.2 bis 3.0.

Bevorzugt wird ein solches Polymer erhalten aus der Reaktion von mindestens einem Hydroxyaldehyd mit mindestens einem Isocyanatgruppen-haltigen Polymer.

Als Hydroxyaldehyd geeignet ist insbesondere 2-Hydroxyacetaldehyd, 3-Hydroxybutanal, 3-Hydroxypivalaldehyd, 5-Hydroxypentanal, 2-(2-Hydroxyethoxy)acetaldehyd, 3-(2-Hydroxyethoxy)propanal, 5-Hydroxymethylfurfural, alkoxyliertes o-, m- oder p-Hydroxybenzaldehyd oder alkoxyliertes Vanillin, wobei "alkoxyliert" bevorzugt für einfach oder mehrfach ethoxyliert oder propoxyliert steht, sowie 4,4'-(2-Hydroxypropan-1,3-diyl)-bis(oxy)-bis(benzaldehyd) oder 4,4'-(2-Hydroxypropan-1,3-diyl)-bis(oxy)-bis(3-methoxybenzaldehyd).

Davon bevorzugt sind Hydroxyaldehyde, deren Aldehydgruppe direkt an einen aromatischen Ring gebunden ist.

Besonders bevorzugt ist ethoxyliertes Salicylaldehyd, insbesondere 2-(2-Hydroxy-ethoxy)benzaldehyd, ethoxyliertes Vanillin, insbesondere 4-(2-Hydroxyethoxy)-3-methoxybenzaldehyd, oder 5-Hydroxymethylfurfural.

Ganz besonders bevorzugt ist ethoxyliertes Salicylaldehyd. Damit werden besonders farbstabile Zusammensetzungen erhalten.

Ganz besonders bevorzugt ist weiterhin 5-Hydroxymethylfurfural. Damit werden besonders gut verarbeitbare Zusammensetzungen mit besonders schneller Aushärtung erhalten.

Als Isocyanatgruppen-haltiges Polymer geeignet ist insbesondere ein Reaktionsprodukt aus der Umsetzung von mindestens einem Polyisocyanat mit mindestens einem Polyol, hergestellt nach einem bekannten Verfahren.

Als Polyisocyanat geeignet ist insbesondere ein Diisocyanat, insbesondere 1,6-Hexandiisocyanat (HDI), Isophorondiisocyanat (IPDI), 4,4'-Diisocyanatodicyclohexylmethan (H₁₂MDI), 4(2),4'-Diphenylmethandiisocyanat (MDI) oder 2,4(6)-Toluendiisocyanat, besonders bevorzugt IPDI.

Als Polyol geeignet sind insbesondere
- Polyetherpolyole, insbesondere Polymerisationsprodukte von Ethylenoxid, 1,2-Propylenoxid, 1,2-Butylenoxid, 2,3-Butylenoxid, Styroloxid, Oxetan, Tetrahydrofuran oder Mischungen davon, wobei diese mit Hilfe eines Startermoleküls mit zwei oder mehreren aktiven Wasserstoffatomen polymerisiert sein können. Bevorzugt sind Poly(oxy-1,2-propylen)diole oder Polyoxypropylentriole, insbesondere propoxylierts Glycerin oder 1,1,1-Trimethylolpropan, wobei diese jeweils zusätzlich an den Kettenenden ethoxyliert sein können. Sie werden auch als EO-terminierte (EO-endcapped) Poly(oxy-1,2-propylen)diole oder Polyoxypropylentriole bezeichnet. Bevorzugte Polyetherpolyole weisen einen Ungesättigtheitsgrad von weniger als 0.02 mEq/g, insbesondere weniger als 0.01 mEq/g, auf.
- Polyesterpolyole, insbesondere aus der Polykondensation von Hydroxycarbonsäuren bzw. Lactonen oder von aliphatischen und/oder aromatischen Polycarbonsäuren mit zwei- oder mehrwertigen Alkoholen. Bevorzugt sind amorphe, bei Raumtemperatur flüssige Polyesterpolyole, insbesondere auch Di- oder Trimerfettsäure-basierte Polyesterpolyole, wie sie kommerziell beispielsweise von der Firma Cargill erhältlich sind.
- Polycarbonatpolyole, erhältlich durch Umsetzung von Diolen mit Dialkylcarbonaten, Diarylcarbonaten oder Phosgen.
- Mindestens zwei Hydroxylgruppen tragende Blockcopolymere, insbesondere Polyetherpolyesterpolyole.
- Polyacrylat- und Polymethacrylatpolyole.
- Polyhydroxyfunktionelle Fette oder Öle, insbesondere natürliche Fette oder Öle wie inbesondere Rizinusöl, ethoxyliertes oder insbesondere propoxyliertes Rizinusöl, Ketonharz-modifiziertes Rizinusöl, oder durch chemische Modifizierung von natürlichen Fetten und Ölen gewonnene, sogenannte oleochemische, Polyole, wie beispielsweise unter dem Handelsnamen Sovermol^{®} (von BASF) erhältliche hydroxylierte Pflanzenöle.
- oder Polykohlenwasserstoffpolyole.

Bevorzugt sind Polyetherpolyole, Di- oder Trimerfettsäure-basierte Polyesterpolyole, Rizinusöl, Derivate von Rizinusöl oder hydroxylierte Pflanzenöle.

Besonders bevorzugt sind Polyetherpolyole, insbesondere Poly(oxy-1,2-propylen)diole oder Polyoxypropylentriole, wobei diese gegebenenfalls EO-terminiert sind. Diese ermöglichen Zusammensetzungen mit besonders hoher Dehnbarkeit und Elastizität bei hoher Wasserbeständigkeit.

Die Zusammensetzung enthält weiterhin mindestens eine Verbindung **B** mit Cyanoacetatgruppen.

Bevorzugt enthält die Verbindung **B** eine bis sechs Cyanoacetatgruppen, besonders bevorzugt zwei bis vier, insbesondere zwei bis drei, Cyanoacetatgruppen.

Bevorzugt ist die Verbindung **B** bei Raumtemperatur flüssig. Insbesondere weist sie eine Viskosität bei 20 °C von 0.01 bis 50 Pa s, mehr bevorzugt 0.01 bis 25 Pa s, besonders bevorzugt 0.01 bis 10 Pa s, insbesondere 0.02 bis 5 Pa s, auf, gemessen mittels Kegel-Platte Viskosimeter mit Kegeldurchmesser 10 mm, Kegelwinkel 1°, Kegelspitze-Platte-Abstand 0.05 mm, Scherrate 10 s⁻¹, für Viskositäten von weniger als 0.5 Pa s mit Kegeldurchmesser 50 mm. Eine solche Verbindung ermöglicht Zusammensetzungen, die bei Umgebungstemperatur und ohne Zusatz von Lösemitteln oder Verdünnern gut verarbeitbar sind.

Bevorzugt weist die Verbindung **B** ein Molekulargewicht, oder im Fall einer oligomeren oder polymeren Verbindung **B** mittleres Molekulargewicht Mₙ, von 100 bis 10'000 g/mol, bevorzugt 196 bis 5'000 g/mol, besonders bevorzugt 240 bis 2'500 g/mol, insbesondere 240 bis 1'500 g/mol, auf.

Bevorzugt weist die Verbindung **B** ein Cyanoacetat-Equivalentgewicht, oder im Fall einer oligomeren oder polymeren Verbindung **B** mittleres Cyanoacetat-Equivalentgewicht, von 100 bis 2'100 g/eq, bevorzugt 114 bis 600 g/eq, insbesondere 114 bis 400 g/eq, auf.

Bevorzugt weist die Verbindung **B** in Bezug auf die Cyanoacetatgruppen eine Funktionalität, oder im Fall einer oligomeren oder polymeren Verbindung **B** mittlere Funktionalität, von 1 bis 4, bevorzugt 1.5 bis 4, mehr bevorzugt 1.8 bis 3.5, besonders bevorzugt 2 bis 3, insbesondere 2.3 bis 3, auf.

Insbesondere weist die Verbindung **B** in Bezug auf die Cyanoacetatgruppen ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **B** mittlere Funktionalität, von 1.5 bis 4, bevorzugt 1.8 bis 3.5, mehr bevorzugt 2 bis 3, insbesondere 2.3 bis 3, auf.

In der erfindungsgemässen Zusammensetzung liegt das Verhältnis der Anzahl Cyanoacetatgruppen zur Anzahl Aldehydgruppen bevorzugt im Bereich von 0.7 bis 2.0, insbesondere 0.9 bis 1.5. Dies ermöglicht eine zuverlässige Aushärtung und ein ausgehärtetes Produkt mit hoher Festigkeit bei hoher Dehnbarkeit.

Bevorzugt wird die Verbindung **B** erhalten aus der Umesterung von mindestens einer Hydroxylgruppen-haltigen Verbindung mit mindestens einer Verbindung der Formel (I), 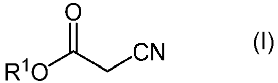 wobei R¹ für C₁₋₆ Alkyl steht.

Bevorzugt steht R¹ für Methyl, Ethyl oder tert.Butyl, insbesondere für Ethyl oder tert. Butyl.

Bevorzugt erfolgt die Umesterung bei einer Temperatur von 50 bis 150 °C unter destillativer Entfernung des freigesetzten Alkohols R¹OH und gegebenenfalls Fragmentierungsprodukten davon, gegebenenfalls unter Vakuum und gegebenenfalls in Anwesenheit von Katalysatoren.

Weiterhin möglich ist die Herstellung durch Veresterung von Cyanoessigsäure mit mindestens einer Hydroxylgruppen-haltigen Verbindung.

Als Verbindung der Formel (I) geeignet ist insbesondere Methylcyanoacetat, Ethylcyanoacetat oder tert.Butylcyanoacetat, insbesondere Ethylcyanoacetat oder tert. Butylcyanoacetat.

Als Hydroxylgruppen-haltige Verbindung bevorzugt sind handelsübliche OH-funktionelle Verbindungen oder Polymere, wie insbesondere 1,2-Ethandiol, Diethylenglykol, Triethylenglykol, 1,2-Propandiol, Dipropylenglykol, Tripropylenglykol, 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 1,10-Decandiol, 1,12-Dodecandiol, Polytetrahydrofurandiole, 1,3-Cyclohexandimethanol, 1,4-Cyclohexandimethanol, 1,1,1-Trimethylolethan, 1,1,1-Trimethylolpropan, Glycerin, Pentaerythrit, propoxyliertes und/oder ethoxyliertes Glycerin mit mittlerem Molekulargewicht Mₙ von 300 bis 6'000 g/mol, propoxyliertes und/oder ethoxyliertes 1,1,1-Trimethylolpropan mit mittlerem Molekulargewicht Mₙ von 300 bis 6'000 g/mol, Poly(oxy-1,2-propylen)diole mit mittlerem Molekulargewicht von 400 bis 4'000 g/mol, EO-terminierte Poly(oxy-1,2-propylen)diole mit mittlerem Molekulargewicht von 1'000 bis 4'000 g/mol, Poly(oxy-1,2-propylen)triole mit mittlerem Molekulargewicht von 400 bis 6'000 g/mol, EO-terminierte Poly(oxy-1,2-propylen)triole mit mittlerem Molekulargewicht von 3'000 bis 6'000 g/mol, Di- oder Trimerfettsäure-basierte Polyesterpolyole mit mittlerem Molekulargewicht von 1'000 bis 3'000 g/mol, Rizinusöl, Derivate von Rizinusöl oder hydroxylierte Pflanzenöle.

Bevorzugt als Verbindung **B** mit Cyanoacetatgruppen ist ein Polymer mit einem mittleren Molekulargewicht Mₙ von 500 bis 6'000 g/mol, besonders bevorzugt 500 bis 2'000 g/mol, insbesondere 500 bis 1'000 g/mol, und einer mittleren Cyanoacetat-Funktionalität von 1.5 bis 4, bevorzugt 1.8 bis 3.5, mehr bevorzugt 2 bis 3, insbesondere 2.3 bis 3. Dies ermöglicht ausgehärtete Zusammensetzungen mit besonders hoher Dehnbarkeit.

Insbesondere ist ein solches Polymer ausgewählt aus der Liste bestehend aus dem Tricyanoacetat von ethoxyliertem und/oder propoxyliertem 1,1,1-Trimethylolpropan, dem Tricyanoacetat von ethoxyliertem und/oder propoxyliertem Glycerin, Poly(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

Besonders bevorzugt ist das Tricyanoacetat von propoxyliertem 1,1,1-Trimethylolpropan) mit insgesamt einem mittleren Molekulargewicht Mₙ von 500 bis 1'000 g/mol.

In einer bevorzugten Ausführungsform der Erfindung beträgt die mittlere Funktionalität der gesamten Zusammensetzung in Bezug auf die Reaktivgruppen Aldehyd- und Cyanoacetatgruppen mindestens 2.2. Das heisst, eine Zusammensetzung mit mittlerer Aldehyd-Funktionalität von beispielsweise 1.8 weist bevorzugt eine mittlere Cyanoacetat-Funktionalität von mindestens 2.4 auf, um insgesamt eine mittlere Reaktivgruppen-Funktionalität von mindestens 2.2 zu erreichen. Eine solche Zusammensetzung ermöglicht eine besonders hohe Festigkeit bei hoher Dehnbarkeit.

Die erfindungsgemässe Zusammensetzung kann zusätzlich weitere Bestandteile enthalten, insbesondere:
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Kieselsäure, Kieselsäure-Kaolinite, calcinierte Kieselsäure-Kaolinite, Schichtsilikate wie Glimmer oder Talk, Zeolithe, Aluminiumhydroxide, Magnesiumhydroxide, hochdisperse Kieselsäuren aus Pyrolyseprozessen, industriell hergestellte Russe, Graphit, Metall-Pulver, beispielsweise von Aluminium, Kupfer, Eisen, Silber oder Stahl, PVC-Pulver oder Hohlkugeln;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe oder Nanofasern wie Graphen oder Carbon Nanotubes;
- Farbstoffe;
- Pigmente, insbesondere Titandioxid, Chromoxid, Eisenoxide oder organische Pigmente;
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicar-boxylat, Isophthalate, Trimellitate, Adipate, insbesondere Dioctyladipat (DOA), Azelate, Sebacate, Benzoate, Glycolether, Glycolester, Weichmacher mit Polyetherstruktur, insbesondere Polypropylenoxid-monole, -diole oder -triole, oder Polypropylenoxid-monole, -diole oder -triole mit blockierten Hydroxylgruppen, insbesondere in der Form von Acetatgruppen, sowie organische Sulfonate oder Phosphate, insbesondere Diphenylkresylphosphat (DPK) oder Tris-2-ethyl-hexylphosphat (TOF), Polybutene, Polyisobutene oder von natürlichen Fetten oder Ölen abgeleitete Weichmacher, insbesondere epoxidiertes Soja- oder Leinöl oder Rapsölmethylester, wobei Phthalate, hydrierte Phthalate, Adipate oder Weichmacher mit Polyetherstruktur bevorzugt sind;
- Lösemittel;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene;
- Trocknungsmittel, insbesondere Calciumoxid, Mono-Oxazolidine wie Incozol^{®} 2 (von Incorez), Orthoester oder Alkoxysilane;
- Haftvermittler, insbesondere Titanate oder Organoalkoxysilane wie Epoxysilane, Mercaptosilane, (Meth)acrylsilane, Carbamatosilane, Alkylsilane, S-(Alkylcarbonyl)mercaptosilane oder oligomere Formen dieser Silane;
- nicht-reaktive thermoplastische Polymere, wie Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Bevorzugt enthält die Zusammensetzung mindestens einen weiteren Bestandteil ausgewählt aus Weichmachern, Füllstoffen und Haftvermittlern. Bevorzugt enthält die Zusammensetzung mehrere solche weitere Bestandteile.

In einer bevorzugten Ausführungsform der Erfindung enthält die härtbare Zusammensetzung bezogen auf die gesamte Zusammensetzung 10 bis 95 Gewichts-%, bevorzugt 20 bis 90 Gewichts-%, insbesondere 30 bis 80 Gewichts-%, Füllstoffe. Bevorzugt sind Füllstoffe ausgewählt aus Calciumcarbonaten, beschichteten Calciumcarbonaten, Quarzmehl, Quarzsand, Kaolin, calciniertem Kaolin, Kieselsäure, Kieselsäure-Kaolinit, calciniertem Kieselsäure-Kaolinit, Aluminiumhydroxid, Titandioxid und Russ. Eine solche Zusammensetzung ist besonders geeignet für Anwendungen in Schichtdicken von mindestens 1 mm, bevorzugt 1 bis 50 mm, insbesondere 1.5 bis 25 mm. Dabei zeigt die ausgehärtete Zusammensetzung ausgeprägt elastische Eigenschaften.

In einer weiteren bevorzugten Ausführungsform der Erfindung enthält die härtbare Zusammensetzung bezogen auf die gesamte Zusammensetzung 5 bis 80 Gewichts-%, insbesondere 10 bis 60 Gewichts-%, Weichmacher. Bevorzugt sind Weichmacher ausgewählt aus DINP, DIDP, DPHP, DINCH, Bis(2-ethylhexyl)-terephthalat, DINT, Bis(2-ethylhexyl)-1,4-cyclohexandicarboxylat, Diisononyl-1,4-cyclohexandicarboxylat, DOA, Polypropylenoxidmonolen, Polypropylenoxiddiolen, Polypropylenoxidtriolen, Polypropylenoxidmonol-acetaten, Polypropylenoxiddioldiacetaten, Polypropylenoxidtrioltriacetaten und DPK.

In einer besonders bevorzugten Ausführungsform der Erfindung enthält die härtbare Zusammensetzung Füllstoffe und Weichmacher, insbesondere bezogen auf die gesamte Zusammensetzung 10 bis 95 Gewichts-%, bevorzugt 20 bis 90 Gewichts-%, insbesondere 30 bis 80 Gewichts-%, Füllstoffe und 5 bis 80 Gewichts-%, insbesondere 10 bis 60 Gewichts-%, Weichmacher.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Verbindungen (VOC) mit einem Siedepunkt bei Normaldruck von weniger als 250 °C, insbesondere organische Lösemittel. Eine solche Zusammensetzung verursacht besonders wenig Emissionen.

Die Zusammensetzung enthält bevorzugt weniger als 0.5 Gewichts-%, besonders bevorzugt weniger als 0.1 Gewichts-%, insbesondere weniger als 0.01 Gewichts-%, Wasser bezogen auf die gesamte Zusammensetzung. Eine solche Zusammensetzung ist besonders lagerstabil.

Bevorzugt umfasst die einkomponentige härtbare Zusammensetzung bezogen auf die gesamte Zusammensetzung
- 5 bis 99 Gewichts-%, bevorzugt 10 bis 70 Gewichts-%, der Summe aus Verbindungen **A** und **B,**
- 1 bis 20 Gewichts-%, bevorzugt 2 bis 10 Gewichts-%, Zeolith,
- 0 bis 50 Gewichts-%, bevorzugt 10 bis 40 Gewichts-%, Weichmacher,
- 0 bis 90 Gewichts-%, bevorzugt 20 bis 80 Gewichts-%, Füllstoffe,
- und gegebenenfalls weitere Substanzen,

Die Zusammensetzung wird bevorzugt hergestellt, indem die Bestandteile mit einer geeigneten Methode miteinander vermischt werden, so dass eine makroskopisch homogene Masse entsteht. Bevorzugt werden der Zeolith und die Füllstoffe in weitgehend trockenem Zustand eingesetzt. Es kann vorteilhaft sein, den Zeolith und/oder die Füllstoffe vorgängig mit einer geeigneten Methode zu trocknen, beispielsweise in einem Umluftoften. Die Herstellung erfolgt bevorzugt unter Ausschluss von Feuchtigkeit. Nach der Herstellung wird die vermischte Zusammensetzung in einem geeigneten feuchtigkeitsdichten Gebinde gelagert, insbesondere Fässer, Container, Hobbocks, Eimer, Kanister, Büchsen, Beutel, Schlauchbeutel, Kartuschen oder Tuben. Die feuchtigkeitsdicht verpackte Zusammensetzung ist lagerstabil. Das heisst, sie kann bei Raumtemperatur während längerer Zeit, typischerweise während mindestens 3 Monaten bis zu 6 Monaten und mehr, aufbewahrt werden, ohne dass sie sich in ihren Anwendungs- oder Gebrauchseigenschaften durch die Lagerung in einem für ihren Gebrauch relevanten Ausmass verändert.

Die Zusammensetzung hat bevorzugt eine flüssige oder pastöse Konsistenz. Je nach Anwendung kann eine flüssige oder eine pastöse Konsistenz bevorzugt sein.

Zur Anwendung wird die Zusammensetzung bei Umgebungsbedingungen auf mindestens ein Substrat appliziert. Dabei kommt die applizierte Zusammensetzung in Kontakt mit Feuchtigkeit, insbesondere Luftfeuchtigkeit und/oder weiterer Feuchtigkeit, beispielsweise aus dem Substrat, auf welches appliziert wird, oder zusätzlicher Feuchtigkeit, welche in die Umgebung der applizierten Zusammensetzung gebracht wurde.

Durch den Kontakt mit Feuchtigkeit beginnt die Zusammensetzung aufgrund der einsetzenden chemischen Reaktion auszuhärten. Dabei reagieren hauptsächlich die Cyanoacetatgruppen mit den Aldehydgruppen, wodurch die Zusammensetzung zuverlässig und störungsfrei zu einem festen, polymeren Material aushärtet.

Ein weiterer Gegenstand der Erfindung ist somit ein Verfahren zum Aushärten der einkomponentigen härtbaren Zusammensetzung, dadurch gekennzeichnet, dass die Zusammensetzung auf mindestens ein Substrat appliziert wird und unter Einwirkung von Luftfeuchtigkeit aushärtet.

Bevorzugt erfolgt die Aushärtung bei Umgebungsbedingungen, insbesondere bei einer Temperatur im Bereich von -5 bis 50 °C, bevorzugt 0 bis 40 °C, insbesondere 5 bis 35 °C.

Geeignete Substrate, auf welche die Zusammensetzung appliziert wird, sind insbesondere
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Um die Aushärtung zu beschleunigen, kann die einkomponentige härtbare Zusammensetzung kurz vor oder während der Applikation mit einer Beschleunigerkomponente enthaltend mindestens einen Beschleuniger für die Reaktion von Cyanoacetatgruppen mit Aldehydgruppen vermischt werden.

Die Beschleunigerkomponente ermöglicht eine besonders schnelle Aushärtung unabhängig von der Umgebungsfeuchte, auch in dicken Schichten sowie zwischen feuchtigkeitsdichten Substraten.

Bevorzugt ist der Beschleuniger für die Reaktion von Cyanoacetatgruppen mit Aldehydgruppen ein Stickstoff-haltiger Katalysator oder eine wässrige Lösung eines basischen Salzes, insbesondere mit einer Konzentration von 10 bis 30 Gewichts-% des Salzes bezogen auf das Gesamtgewicht der Lösung, oder Wasser.

Bevorzugt als Stickstoff-haltiger Katalysator sind sekundäre oder tertiäre Amine. Geeignete sekundäre Amine sind insbesondere Dimethylamin, Diethylamin, Dipropylamin, Diisopropylamin, Dibutylamin, Diisobutylamin, Di-sek.-butylamin, Di(2-ethylhexyl)amin, N-Methylbutylamin, N-Ethylbutylamin, Di(2-methoxyethyl)amin, Diethanolamin, N-Methylethanolamin, N-Ethylethanolamin, N-Methylcyclohexylamin, N-Ethyl-cyclohexylamin, Piperidin, Pyrrolidin, Morpholin, N,N'-Dimethyl-1,3-propandiamin, N,N'-Diethyl-1,3-propandiamin, N,N'-Dibenzyl-1,2-ethandiamin, Piperazin, N-Methylpiperazin, N-Ethylpiperazin, N-Hydroxyethylpiperazin, Imidazolidin, N-Methylimidazolidin, Prolin oder Imidazol.

Geeignete tertiäre Amine sind insbesondere Triethylamin, Tripropylamin, Tributylamin, Tri(2-ethylhexyl)amin, N,N-Dimethylisopropylamin, N-Ethyldiisopropylamin, N,N-Dimethylcyclohexylamin, N,N-Dimethyl-C₁₂₋₁₄-alkylamin, N,N-Dimethylbenzylamin, α-Methylbenzyldimethylamin, Tetramethyl-1,2-ethandiamin, Tetramethyl-1,6-hexandiamin, Pentamethyldiethylentriamin, Tris(3-dimethylaminopropyl)amin, Triethanolamin, Triisopropanolamin, N,N-Dimethylethanolamin, N,N-Diethylethanolamin, N,N-Dibutylethanolamin, N,N-Dimethyl-1,3-propanolamin, N-Methyldiethanolamin, N-Methylpiperidin, N,N'-Dimethylpiperazin, N-Methyl-N'-dimethyl-aminoethylpiperazin, Bis(dimethylaminoethyl)piperazin, 1,4-Diazabicyclo[2.2.2]-octan (DABCO), 1,3,5-Trimethylhexahydrotriazin, 1,3,5-Tris(dimethylaminopropyl)hexahydrotriazin, 1,3-Bis(dimethylaminopropyl)harnstoff, Bis(2-dimethylaminoethyl)ether, Tris(2-(2-methoxyethoxy)ethyl)amin, 2,2'-Dimorpholinodiethylether (DMDEE), N-Methylimidazol, N-Vinylimidazol oder 1,2-Dimethylimidazol.

Bevorzugt als basisches Salz sind Kaliumacetat, Kaliumbenzoat, Kaliumcarbonat, Kaliumhydrogencarbonat, Kaliumphosphat, Natriumacetat, Natriumbenzoat, Natriumcarbonat, Natriumhydrogencarbonat, Natriumphosphat, Lithiumacetat, Lithiumbenzoat, Lithiumcarbonat, Lithiumhydrogencarbonat oder Lithiumphosphat.

Ein weiterer Gegenstand der Erfindung ist die ausgehärtete Zusammensetzung erhalten aus dem Verfahren zum Aushärten der einkomponentigen härtbaren Zusammensetzung wie beschrieben, gegebenenfalls unter Mitverwendung einer Beschleunigerkomponente.

Bevorzugt ist die ausgehärtete Zusammensetzung elastisch und weist eine hohe Festigkeit bei hoher Dehnbarkeit und hohem Weiterreisswiderstand auf. Bevorzugt weist die ausgehärtete Zusammensetzung eine Bruchdehnung von mindestens 50 %, bevorzugt mindestens 100 %, insbesondere mindestens 150 %, auf, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm).

Bevorzugt weist die ausgehärtete Zusammensetzung eine Zugfestigkeit von mindestens 1 MPa, bevorzugt mindestens 1.5 MPa, mehr bevorzugt mindestens 2 MPa, mehr bevorzugt mindestens 2.5 MPa, insbesondere mindestens 3 MPa, auf, bestimmt gemäss DIN EN 53504 bei einer Zuggeschwindigkeit von 200 mm/min an hantelförmigen Prüfkörpern (Dicke 2 mm, Länge 75 mm, Steglänge 30 mm, Stegbreite 4 mm).

Weiterhin verfügt die ausgehärtete Zusammensetzung über eine gute Beständigkeit gegen Hitze und Wasser. Bevorzugt zeigt die ausgehärtete Zusammensetzung auch nach einer Lagerung während 7 Tagen bei 100 °C oder bei 70 °C und 100 % relativer Feuchtigkeit eine hohe Festigkeit und Dehnbarkeit.

Die beschriebene Zusammensetzung eignet sich für eine Vielzahl von Verwendungen. Sie kann insbesondere verwendet werden als Klebstoff, Dichtstoff, Beschichtung, Giessharz oder Spachtelmasse, insbesondere als elastischer Klebstoff, elastischer Dichtstoff oder elastische Beschichtung.

Ein weiterer Gegenstand der Erfindung ist die Verwendung der Zusammensetzung als elastischer Klebstoff, elastischer Dichtstoff oder elastische Beschichtung.

Aus der Verwendung der härtbaren Zusammensetzung wird ein Artikel erhalten. Der Artikel ist insbesondere mit der Zusammensetzung verklebt, abgedichtet oder beschichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut oder ein Anbauteil davon sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

Die **Viskosität** wurde auf einem thermostatisierten Kegel-Platte-Viskosimeter Rheotec RC30 (Kegeldurchmesser 10 mm, Kegelwinkel 1°, Kegelspitze-Platte-Abstand 0.05 mm, Scherrate 10 s⁻¹) gemessen, wobei für Viskositäten von weniger als 0.5 Pa s ein Kegeldurchmesser von 50 mm verwendet wurde. **Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

### Herstellung von Polymeren mit Aldehydgruppen:

### Polymer A-1:

500 g des Isocyanatgruppen-haltigen **Polymer-1** (NCO-Gehalt 1.84 Gewichts-%, Basis IPDI, hergestellt wie nachfolgend beschrieben) wurde in Gegenwart von 0.1 g Dibutylzinndilaurat unter Ausschluss von Feuchtigkeit bei 110 °C mit 27.7 g 5-Hydroxymethylfurfural umgesetzt, bis mittels IR-Spektroskopie keine Isocyanatgruppen mehr nachweisbar waren. Erhalten wurde eine klare, farblose Flüssigkeit mit einer Viskosität von 63.7 Pa s bei 20 °C, einer mittleren Aldehyd-Funktionalität von ca. 2.3 und einem theoretischen Aldehyd-Equivalentgewicht von 2381 g/eq. Das mittlere Molekulargewicht Mₙ betrug 6'100 g/mol, bestimmt mittels Gelpermeationschromatographie (GPC) gegen Polystyrol (474 bis 2'520'000 g/mol) als Standard, mit Tetrahydrofuran als mobile Phase und Brechungsindex-Detektor.

### Polymer A-2:

500 g des Isocyanatgruppen-haltigen **Polymer-2** (NCO-Gehalt 1.68 Gewichts-%, Basis MDI, hergestellt wie nachfolgend beschrieben) wurde unter Ausschluss von Feuchtigkeit bei 80 °C mit 25.5 g 5-Hydroxymethylfurfural umgesetzt, bis mittels IR-Spektroskopie keine Isocyanatgruppen mehr nachweisbar waren. Erhalten wurde eine klare, farblose Flüssigkeit mit einer Viskosität von 187.1 Pa s bei 20 °C, einer mittleren Aldehyd-Funktionalität von ca. 2.3 und einem theoretischen Aldehyd-Equivalentgewicht von 2632 g/eq.

Das Isocyanatgruppen-haltige **Polymer-1** wurde hergestellt, indem 780 g Ethylenoxid-terminiertes Polyoxypropylentriol (Desmophen^{®} 5031 BT, OH-Zahl 28.0 mg KOH/g, OH-Funktionalität ca. 2.3, von Covestro) mit 303 g Isophorondiisocyanat (Vestanat^{®} IPDI, von Evonik) bei 80 °C nach bekanntem Verfahren zu einer Reaktionsmischung mit einem NCO-Gehalt von 9.1 Gewichts-% umgesetzt wurden und anschliessend die flüchtigen Bestandteile, insbesondere nicht umgesetztes Isophorondiisocyanat, in einem Kurzwegverdampfer destillativ entfernt wurden (Manteltemperatur 160 °C, Druck 0.1 bis 0.005 mbar), wobei ein Polymer mit einem NCO-Gehalt von 1.84 Gewichts-% und einem Gehalt an monomerem Isophorondiisocyanat von 0.02 Gewichts-% erhalten wurde.

Das Isocyanatgruppen-haltige **Polymer-2** wurde hergestellt, indem 725 g Ethylenoxid-terminiertes Polyoxypropylentriol (Desmophen^{®} 5031 BT, OH-Zahl 28.0 mg KOH/g, OH-Funktionalität ca. 2.3, von Covestro) mit 275 g 4,4'-Diphenylmethandiisocyanat (Desmodur^{®} 44 MC L, von Covestro) bei 80 °C nach bekanntem Verfahren zu einer Reaktionsmischung mit einem NCO-Gehalt von 7.6 Gewichts-% umgesetzt wurden und anschliessend die flüchtigen Bestandteile, insbesondere nicht umgesetztes 4,4'-Diphenylmethandiisocyanat, in einem Kurzwegverdampfer destillativ entfernt wurden (Manteltemperatur 180 °C, Druck 0.1 bis 0.005 mbar), wobei ein Polymer mit einem NCO-Gehalt von 1.68 Gewichts-% und einem Gehalt an monomerem 4,4'-Diphenylmethandiisocyanat von 0.04 Gewichts-% erhalten wurde.

Herstellung von Verbindungen mit Cyanoacetat- oder Acetoacetatgruppen:

### Verbindung B-1:

555.2 g (5.4 mol OH) propoxyliertes 1,1,1-Trimethylolpropan (Desmophen^{®} 4011 T, OH-Zahl 550 mg KOH/g, von Covestro) wurden mit 633.5 g (5.6 mol) Ethylcyanoacetat und 1.2 g Tetra-n-butyltitanat (Tyzor^{®} TnBT, von Dorf Ketal) versetzt und bei einer Temperatur von 80 bis 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 866.2 g einer klaren, gelblichen Flüssigkeit mit einer Viskosität von 1.72 Pa s bei 20 °C, einer mittleren Cyanoacetat-Funktionalität von ca. 3 und einem theoretischen Cyanoacetat-Equivalentgewicht von 169 g/eq.

### Verbindung R-1:

154.2 g (1.5 mol OH) propoxyliertes 1,1,1-Trimethylolpropan (Desmophen^{®} 4011 T, OH-Zahl 550 mg KOH/g, von Covestro) wurden mit 201.7 g (1.55 mol) Ethylacetoacetat und 0.4 g Tetra-n-butyltitanat (Tyzor^{®} TnBT, von Dorf Ketal) versetzt und bei einer Temperatur von 80 bis 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 265.1 g einer klaren, gelblichen Flüssigkeit mit einer Viskosität von 0.8 Pa s bei 20 °C, einer mittleren Acetoacetat-Funktionalität von ca. 3 und einem theoretischen Acetoacetat-Equivalentgewicht von 186 g/eq.

### Herstellung von einkomponentigen Zusammensetzungen:

### verwendete Substanzen:

| | |
|---|---|
| Zeolith: | Sylosiv^{®} A 3 (von Grace) |
| Weichmacher-1: | n-Butanol-gestartetes acetyliertes PPG-Monol, hergestellt aus der Umsetzung von Synalox^{®} 100-20B (mittleres Molekulargewicht Mₙ ca. 750 g/mol, vonDow) und Essigsäureanhydrid unter destillativer Enfernung von Essigsäure |
| Epoxysilan: | 3-Glycidoxypropyltrimethoxysilan |
| Russ: | Monarch^{®} 570 (von Cabot) |

### Zusammensetzungen Z1 bis Z9:

Für jede Zusammensetzung wurden die in Tabelle 1 angegebenen Inhaltsstoffe in den angegebenen Mengen (in Gewichtsteilen) mittels eines Zentrifugalmischers (SpeedMixer^{™} DAC 150, FlackTek Inc.) zu einer makroskopisch homogenen Paste verarbeitet und die vermischte Zusammensetzung in einem feuchtigkeitsdichten Gebinde aufbewahrt. Der Zeolith, die Füllstoffe und der Russ wurden vorgängig in einem Umluftofen bei 130 °C getrocknet.

Jede Zusammensetzung wurde folgendermassen geprüft:
Die **Lagerstabilität** der Zusammensetzung wurde bestimmt, indem jeweils die Viskosität nach einer Lagerzeit im verschlossenen Gebinde von 1d im Normklima (NK) und nach 7d in einem Umluftofen bei 40 °C gemessen wurde. Ein geringer Anstieg der Viskosität nach 7d bei 40 °C im Vergleich zu 1d NK zeigt eine besonders gute Lagerstabilität. Eine nicht-lagerstabile Zusammensetzung ist nach Aufbewahrung während 7d bei 40 °C im verschlossenen Gebinde ausgehärtet.

Die Zeit bis zur Klebefreiheit (**Tack Free Time** oder abgekürzt **TFT**) wurde bestimmt, indem 20 g der vermischten Zusammensetzung in einer Schichtdicke von ca. 2 mm auf Pappkarton aufgetragen und im Normklima die Zeitdauer bestimmt wurde, bis beim leichten Antippen der Oberfläche der applizierten Zusammensetzung mittels einer Pipette aus LDPE erstmals keine Rückstände auf der Pipette mehr zurückblieben.

Die Geschwindigkeit der **Durchhärtung** wurde bestimmt, indem eine raupenförmige Probe mit einer Dicke von ca. 10 mm im Normklima appliziert wurde. Nach 1d (24h), 2d, 3d, 4d und 7d wurde die Raupe jeweils an einer unbeschädigten Stelle aufgeschnitten und die Dicke der von Aussen her ausgehärteten Haut gemessen. Eine Dicke von 10 mm entspricht dabei einer vollständigen Durchhärtung der Raupe.

Zur Bestimmung der mechanischen Eigenschaften wurde die Zusammensetzung auf einem silikonbeschichteten Trennpapier zu einem Film von 2 mm Dicke aufgebracht, dieser während 7 Tagen im Normklima aushärten lassen, einige hantelförmige Prüfkörper mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit, Bruchdehnung, E-Modul 5%** (bei 0.5-5% Dehnung) und **E-Modul 50%** (bei 0.5-50% Dehnung) geprüft. Weiter wurden einige Prüfkörper zur Bestimmung des **Weiterreisswiderstands** ausgestanzt und gemäss DIN ISO 34-1, Verfahren B (winkelförmiger Prüfkörper) bei einer Zuggeschwindigkeit von 500 mm/min geprüft.

Die **Shore A** Härte wurde nach DIN 53505 an während 7 Tagen im Normklima gehärteten Prüfkörpern (Durchmesser 20 mm, Dicke 5 mm) bestimmt. Diese Resultate sind mit dem Zusatz **"7d NK"** versehen. Zur Bestimmung der Beständigkeit gegen Hitze und Wasser wurden weitere Shore A-Prüfkörper nach 7 Tagen Aushärtung im Normklima entweder zusätzlich während 7 Tagen in einem Umluftofen bei 100 °C gelagert oder zusätzlich während 7 Tagen bei 70 °C und 100 % relativer Feuchtigkeit gelagert und nach Abkühlen auf Raumtemperatur die Shore A-Härte bestimmt. Diese Resultate sind mit dem Zusatz **"+7d 100°C"** bzw. **"+7d 70/100"** versehen.

Die Resultate sind Tabelle 1 angegeben.

Die mit **"(Ref.)"** bezeichneten Zusammensetzungen sind Vergleichsbeispiele.

**Tabelle 1: Zusammensetzungen Z1 bis Z9.**

| **Zusammensetzung** | | **Z1** | **Z2** | **Z3** | **Z4** | **Z5** | **Z6** |
|---|---|---|---|---|---|---|---|
| Polymer **A-1** | | 90 | 90 | 90 | 90 | 90 | - |
| Polymer **A-2** | | - | - | - | - | - | 90 |
| Verbindung **B-1** | | 7 | 7 | 7 | 7 | 7 | 7 |
| Verbindung **R-1** | | - | - | - | - | - | - |
| Zeolith | | 12 | 12 | 12 | 12 | 12 | 12 |
| Weichmacher-1 | | 60 | 60 | 60 | 60 | - | 60 |
| Polyoxypropylendiol ¹ | | - | - | - | - | 60 | - |
| Epoxysilan | | 2 | 2 | 2 | 2 | 2 | 2 |
| Russ | | 40 | 40 | 40 | 40 | 40 | 40 |
| Füllstoff | | 100 ² | 100 ³ | 100 ⁴ | 100 ⁵ | 100 ⁶ | 100 ⁶ |
| Viskosität (20°C) [Pa·s] | 1d NK | 533 | 537 | 492 | 534 | 396 | 561 |
| | 7d 40 °C | 700 | 675 | 615 | 678 | 591 | 639 |
| TFT (Tack Free Time) | | > 8 h | > 8 h | > 8 h | 7h | 5.5 h | 5 h |
| Durchhärtung [mm] | 1d NK | 0.5 | 0.5 | 0.5 | 1 | 1 | 1 |
| | 2d NK | 1.5 | 2 | 2 | 2 | 3 | 2 |
| | 3d NK | 2.5 | 3 | 5 | 3 | 4 | 4 |
| | 4d NK | 3.5 | 5 | 8 | 4 | 5 | 10 |
| | 7d NK | 10 | 10 | 10 | 10 | 6 | |
| Zugfestigkeit Bruchdehnung | [MPa] | 6.9 | 5.9 | 6.9 | 5.2 | 5.7 | 5.3 |
| | [%] | 187 | 161 | 187 | 308 | 391 | 301 |
| E-Modul 5% | [MPa] | 3.9 | 4.8 | 5.1 | 3.8 | 3.8 | 3.7 |
| E-Modul 50% | [MPa] | 4.1 | 4.3 | 5.0 | 2.5 | 2.5 | 2.3 |
| Weiterreisswiderstand [N/mm] | | 9.5 | 9.2 | 9.1 | 7.8 | 8.4 | 7.1 |
| Shore A | (7d NK) | 63 | 56 | 64 | 54 | 57 | 57 |
| | (+ 7d 100°C) | 70 | 67 | 66 | 63 | 64 | 68 |
| | (+ 7d 70/100) | 63 | 55 | 61 | 50 | 54 | 49 |

| | | | | | | | |
|---|---|---|---|---|---|---|---|
| ¹ Voranol^{®} 1010 L, Mₙ ca. 1000 g/mol (von Dow) (als Weichmacher) ² calciniertes Kaolin (Satintone^{®} W, von HM Royal) ³ Kieselsäure-Kaolinit (Sillitin^{®} Z86, von Hoffmann Mineral) ⁴ calciniertes Kieselsäure-Kaolinit (Silfit^{®} Z91, von Hoffmann Mineral) ⁵ gemahlenes Calciumcarbonat (Omyabond^{®} 420-OG, von Omya) ⁶ beschichtetes Calciumcarbonat (Omyacarb^{®} 1T-AV, von Omya) ⁷ nicht messbar, da keine Aushärtung | | | | | | | |

**Tabelle 1: (Fortsetzung)**

| **Zusammensetzung** | | **Z7 (Ref.)** | **Z8 (Ref.)** | **Z9 (Ref.)** |
|---|---|---|---|---|
| Polymer **A-1** | | 90 | 90 | 90 |
| Polymer **A-2** | | - | - | - |
| Verbindung **B-1** | | 7 | - | - |
| Verbindung **R-1** | | - | 10.3 | 10.3 |
| Zeolith | | - | 12 | - |
| Weichmacher-1 | | 60 | 60 | 60 |
| Polyoxypropylendiol ¹ | | - | - | - |
| Epoxysilan | | 2 | 2 | 2 |
| Russ | | 40 | 40 | 40 |
| Füllstoff | | 110 ² | 100 ² | 110 ² |
| Viskosität (20°C) [Pa·s] | 1d NK | 576 | 586 | 532 |
| | 7d 40 °C | 644 | 667 | 655 |
| TFT (Tack Free Time) | | > 7 d | > 7d | > 7 d |
| Durchhärtung [mm] | 1d NK | n.m.7 | n.m.7 | n.m.7 |
| | 2d NK | | | |
| | 3d NK | | | |
| | 4d NK | | | |
| | 7d NK | | | |
| Zugfestigkeit Bruchdehnung | [MPa] | n.m. | n.m. | n.m. |
| | [%] | | | |
| E-Modul 5% | [MPa] | | | |
| E-Modul 50% | [MPa] | | | |
| Weiterreisswiderstand [N/mm] | | n.m. | n.m. | n.m. |
| Shore A | (7d NK) | n.m. | n.m. | n.m. |
| | (+ 7d 100°C) | | | |
| | (+ 7d 70/100) | | | |

Aus der Tabelle 1 ist ersichtlich, dass die erfindungsgemässen einkomponentigen Zusammensetzungen **Z1** bis **Z6** lagerstabil sind und bei Applikation im Normklima unter dem Einfluss von Luftfeuchtigkeit zuverlässig und störungsfrei zu einem elastischen Polymer mit hoher Festigkeit, Dehnbarkeit, Weiterreisswiderstand und guter Beständigkeit gegenüber Hitze und Wasser aushärten. Dabei erfolgt die Härtung von aussen nach innen, gemäss dem Eindringen von Luftfeuchtigkeit in die applizierte Zusammensetzung. Weiterhin ist ersichtlich, dass die Vergleichsbeispiele Zusammensetzung **Z7 (Ref.)** ohne Zeolith und **Z8 (Ref.)** und **Z9 (Ref.)** mit Acetoacetatgruppen anstelle von Cyanoacetatgruppen, mit und ohne Zeolith, nach 7 Tagen im Normklima noch keine Haut auf der Oberfläche gebildet hatten und keine Aushärtung erfolgte.

### Zusammensetzungen Z10 bis Z12:

Die Zusammensetzung **Z1** wurde unter Beimischung einer **Beschleunigerkomponente** gemäss den Angaben in Tabelle 2 (in Gewichtsteilen) ausgehärtet, wobei die Beschleunigerkomponente mittels dem Zentrifugalmischer eingemischt wurde.

Die frisch vermischte Zusammensetzung wurde wie für Zusammensetzung **Z1** beschrieben geprüft.

Die Resultate sind in Tabelle 2 angegeben.

**Tabelle 2: Zusammensetzungen Z10 bis Z12.**

| **Zusammensetzung** | | **Z10** | **Z11** | **Z12** |
|---|---|---|---|---|
| Zusammensetzung **Z1** | | 100 | 100 | 100 |
| Beschleunigerkomponente | | DAEE ¹ | K₃PO₄ ² | H₂O |
| | | 0.2 | 0.4 | 3.8 |
| TFT [h:min] | | 0:05 | 0:35 | 2:10 |
| Zugfestigkeit | [MPa] | 7.9 | 7.2 | 5.8 |
| Bruchdehnung | [%] | 132 | 164 | 150 |
| E-Modul 5% | [MPa] | 4.5 | 4.2 | 4.5 |
| E-Modul 50% | [MPa] | 5.2 | 5.0 | 4.5 |
| Weiterreisswiderstand [N/mm] | | 5.6 | 6.9 | 8.4 |
| Shore A | (7d NK) | 65 | 62 | 58 |
| | (+ 7d 100°C) | 70 | 67 | 66 |
| | (+ 7d 70/100) | 59 | 54 | 55 |

| | | | | |
|---|---|---|---|---|
| ¹ Bis(2-dimethylaminoethyl)ether ² 25 Gewichts-% in Wasser | | | | |

## Patentansprüche

1. Einkomponentige härtbare Zusammensetzung enthaltend
- mindestens eine Verbindung **A** mit Aldehydgruppen,
- mindestens eine Verbindung **B** Cyanoacetatgruppen, und
- mindestens ein Zeolith,
wobei mindestens eine der beiden Verbindungen **A** und **B** ein Polymer mit einem mittleren Molekulargewicht Mₙ von 500 bis 20'000 g/mol ist, gemessen mittels Gelpermeationschromatographie (GPC) gegen Polystyrol als Standard.

2. Zusammensetzung gemäss Anspruch 1, **dadurch gekennzeichnet, dass** der Zeolith eine Porengrösse von 3 bis 10 Å, bevorzugt 3 bis 5 Å, aufweist.

3. Zusammensetzung gemäss Anspruch 1 oder 2, **dadurch gekennzeichnet, dass** bezogen auf die gesamte Zusammensetzung 1 bis 20 Gewichts-%, bevorzugt 2 bis 10 Gewichts-%, Zeolith enthalten sind.

4. Zusammensetzung gemäss einem der Ansprüche 1 bis 3, **dadurch gekennzeichnet, dass** die Verbindung **A** ein Polymer mit einem mittleren Molekulargewicht Mₙ von 500 bis 20'000 g/mol, bevorzugt 1'000 bis 15'000 g/mol, insbesondere 2'000 bis 10'000, und einer mittleren Aldehyd-Funktionalität von 1.6 bis 4.0, bevorzugt 1.8 bis 3.5, besonders bevorzugt 2.0 bis 3.0, insbesondere 2.2 bis 3.0, ist.

5. Zusammensetzung gemäss einem der Ansprüche 1 bis 4, **dadurch gekennzeichnet, dass** die Verbindung **B** in Bezug auf die Cyanoacetatgruppen ein Equivalentgewicht, oder im Fall einer oligomeren oder polymeren Verbindung **B** mittleres Equivalentgewicht, von 100 bis 2'100 g/eq, bevorzugt 114 bis 600 g/eq, insbesondere 114 bis 400 g, und eine Funktionalität, oder im Fall einer oligomeren oder polymeren Verbindung **B** mittlere Funktionalität, von 1.5 bis 4, bevorzugt 1.8 bis 3.5, mehr bevorzugt 2 bis 3, insbesondere 2.3 bis 3, aufweist.

6. Zusammensetzung gemäss einem der Ansprüche 1 bis 5, **dadurch gekennzeichnet, dass** das Verhältnis der Anzahl Cyanoacetatgruppen zur Anzahl Aldehydgruppen in der gesamten Zusammensetzung im Bereich von 0.7 bis 2.0, insbesondere 0.9 bis 1.5, liegt.

7. Zusammensetzung gemäss einem der Ansprüche 1 bis 6, **dadurch gekennzeichnet, dass** die Verbindung **B** ein Polymer mit einem mittleren Molekulargewicht Mₙ von 500 bis 6'000 g/mol, besonders bevorzugt 500 bis 2'000 g/mol, insbesondere 500 bis 1'000 g/mol, und einer mittleren Cyanoacetat-Funktionalität von 1.5 bis 4, bevorzugt 1.8 bis 3.5, mehr bevorzugt 2 bis 3, insbesondere 2.3 bis 3, ist,

8. Zusammensetzung gemäss Anspruch 7, **dadurch gekennzeichnet, dass** die Verbindung **B** ausgewählt ist aus der Liste bestehend aus dem Tricyanoacetat von ethoxyliertem und/oder propoxyliertem 1,1,1-Trimethylolpropan, dem Tricyanoacetat von ethoxyliertem und/oder propoxyliertem Glycerin, Poly-(oxy-1,2-propylen)diol-bis(cyanoacetat), Ethylenoxid-Einheiten enthaltendem Poly(oxy-1,2-propylen)diol-bis(cyanoacetat), Dimerfettsäure-basiertem Polyesterdiol-bis(cyanoacetat) und Trimerfettsäure-basiertem Polyestertriol-tris(cyanoacetat).

9. Zusammensetzung gemäss einem der Ansprüche 1 bis 8, **dadurch gekennzeichnet, dass** die mittlere Funktionalität der gesamten Zusammensetzung in Bezug auf die Reaktivgruppen Aldehyd- und Cyanoacetatgruppen mindestens 2.2 beträgt.

10. Zusammensetzung gemäss einem der Ansprüche 1 bis 9, **dadurch gekennzeichnet, dass** mindestens ein weiterer Bestandteil ausgewählt aus Weichmachern, Füllstoffen und Haftvermittlern enthalten ist.

11. Zusammensetzung gemäss einem der Ansprüche 1 bis 10, **dadurch gekennzeichnet, dass** bezogen auf die gesamte Zusammensetzung 10 bis 95 Gewichts-%, bevorzugt 20 bis 90 Gewichts-%, insbesondere 30 bis 80 Gewichts-%, Füllstoffe und 5 bis 80 Gewichts-%, insbesondere 10 bis 60 Gewichts-%, Weichmacher enthalten sind.

12. Verfahren zum Aushärten der Zusammensetzung gemäss einem der Ansprüche 1 bis 11, **dadurch gekennzeichnet, dass** die Zusammensetzung auf mindestens ein Substrat appliziert wird und unter Einwirkung von Luftfeuchtigkeit aushärtet.

13. Verfahren gemäss Anspruch 12, **dadurch gekennzeichnet, dass** kurz vor oder während der Applikation der Zusammensetzung eine Beschleunigerkomponente enthaltend mindestens einen Beschleuniger für die Reaktion von Cyanoacetatgruppen mit Aldehydgruppen mit der Zusammensetzung vermischt wird.

14. Ausgehärtete Zusammensetzung erhalten aus dem Verfahren gemäss einem der Ansprüche 12 oder 13, wobei die ausgehärtete Zusammensetzung insbesondere elastisch ist und insbesondere eine Bruchdehnung von mindestens 50 %, bevorzugt mindestens 100 %, insbesondere mindestens 150 %, aufweist, bestimmt gemäss DIN EN 53504 bei einer Zuggeschwindigkeit von 200 mm/min an hantelförmigen Prüfkörpern mit Dicke 2 mm, Länge 75 mm, Steglänge 30 mm und Stegbreite 4 mm.

15. Verwendung der einkomponentigen härtbaren Zusammensetzung gemäss einem der Ansprüche 1 bis 11 als elastischer Klebstoff, elastischer Dichtstoff oder elastische Beschichtung.
